# EUROPEAN PATENT SPECIFICATION

(11) **EP 2 606 228 B1**
(45) Date of publication and mention of the grant of the patent: **18.05.2016**
(21) Application number: 11818841.6
(22) Date of filing: 19.08.2011
(51) Int. Cl.: F03D 80/00, F03D 13/25, F03D 1/00

(54) **OFFSHORE WIND TURBINE AND METHODS OF INSTALLING SAME**
OFFSHORE-WINDKRAFTANLAGE UND INSTALLATIONSVERFAHREN DAFÜR
EOLIENNE EN MER ET SES PROCÉDÉS D'INSTALLATION

(30) Priority: 20.08.2010 US 375551 P
(43) Date of publication of application: 26.06.2013
(73) Proprietor: Horton Wison Deepwater, Inc., Houston, Texas 77084 (US)
(72) Inventor: HORTON III, Edward E., Houston Texas 77057 (US); MCCELVEY, James, Houston 77024 77024 (US); SIRNIVAS, Senu, Houston Texas 77018 (US); DAVIES, Richard, Houston Texas 77084 (US)
(74) Representative: Beck Greener
(86) International application number: PCT/US2011/048458
(87) International publication number: WO 2012/024608

(56) References cited:
- WO-A1-95/00757
- WO-A1-2010/151145
- JP-A- 2001 020 849
- JP-A- 2007 263 077
- US-A- 4 311 434
- US-A1- 2004 169 376
- US-A1- 2004 169 376
- US-A1- 2007 243 063
- US-A1- 2007 243 063
- US-A1- 2010 150 665

## Description

The invention relates generally to wind turbines. More particularly, the disclosure relates to an offshore wind turbine having a floatable tower and support truss, and associated methods of deployment and installation.

Wind turbines are commonly used to convert the kinetic energy of wind into mechanical power. The mechanical power, in turn, may be used to perform a specific task. Alternatively, the mechanical power may be converted into electricity by a generator. The wind turbines may be installed in close proximity, forming a wind farm, and connected to an electricity grid. Electricity produced by the wind farm may then be provided to the electricity grid for widespread distribution and use.

The location of a wind turbine, or wind farm, is crucial. The wind farm should be located such that it is exposed to as much wind as possible. Offshore locations offer a number of advantages, such as the availability of large areas over which a wind farm may be installed, higher wind speeds, and less turbulence, such as that caused by buildings, or other obstructions, which subject the wind turbines to fatigue.

Offshore locations also have their drawbacks. In particular, the wind turbines must be designed to withstand additional loads imparted by waves and currents in the surrounding water.

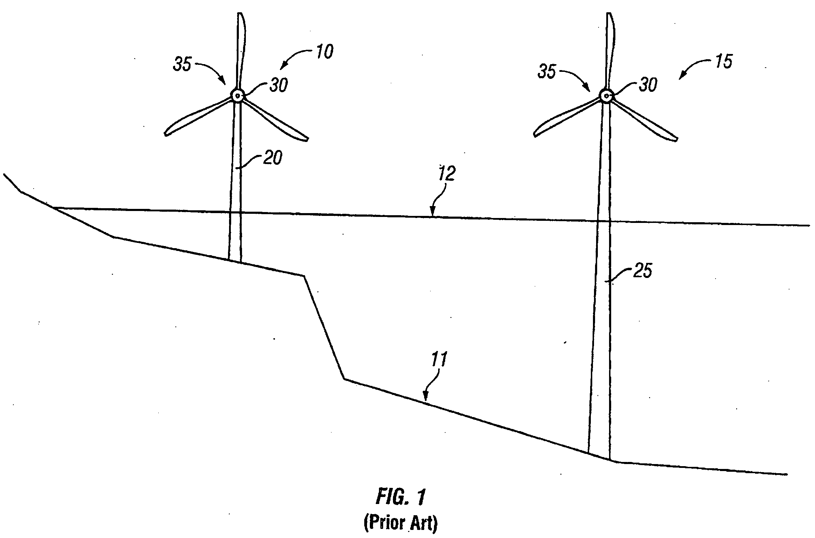

Figure 1 illustrates two conventional offshore wind turbines 10, 15. Each wind turbine 10, 15 includes a vertical tower 20, 25, respectively, that supports the weight of a rotor 30, a nacelle 35, and the various generating components (e.g., generator, gearbox, drive train, brake assembly, etc.) housed within nancelle 35. Each tower 20, 25 extends from the sea floor 11 and pierces the sea surface 12, and thus, is configured to withstand loads imparted by wind and the surrounding water (e.g., waves and currents). Consequently, the cross-sectional areas of towers 20, 25 increase with increasing water depth. Furthermore, turbine 15 is located in deeper water and is therefore subject to higher forces from the surrounding water. To accommodate the increased loading, tower 25 is greater in size than tower 20 (e.g., tower 25 has a greater diameter than tower 20).

Given their design configurations, towers 20, 25 must have significant mass to prevent collapse under the applied wind, wave, and current loads. This, in turn, affects the manufacturing cost and installation complexity of turbines 10, 15. Accordingly, there remains a need in the art for offshore wind turbines that are more adept at withstanding wind, wave, and current loads. Such offshore turbines would be particularly well-received if they were less expensive to make and easier to install.

US2007/243063 describes wind turbines disposed on towers that are capable of being elevated and retracted. A wind turbine is placed on an elevator tower that is extendable vertically from a platform. The elevated tower is disclosed as being potentially installed on a variety of different towers, some of which include truss-like structures.

US2004/169376 is generally directed to wind generators installed off-shore including a base, and a pylon having a bottom portion connected to the base and a top portion slidably disposed within the bottom portion. One example illustrates a plurality of reinforcements such that the bottom portion of the pylon resembles a "truss" like structure.

US2010/150665 relates to structures for the support of installations above a water surface. A tower structure includes a hollow outer section and an inner section received within the outer section. During operations, the tower structure is landed on a substructure that is landed on the sea floor and the inner section telescopically extends out and upward from the outer section.

US4311434 generally relates to wind turbines comprising a tower that appears to include a truss-like structure.

WO95/00757 relates to a wind energy plant that includes a wind rotor, machinery, a housing, and a supporting structure. The support structure is said to be anchored to the ground.

WO2010/151145 describes a windmill and method of installation, intervention or decommissioning of the windmill. The windmill includes a foundation element that is secured to the sea floor (e.g., with piles). The windmill includes a shaft that telescopes out from the foundation element and supports a generator house and blades of the windmill.

According to a first aspect of the present invention, there is provided an offshore wind turbine, comprising:
an elongate base having a longitudinal axis, a first end, and a second end opposite the first end;
a tower moveably coupled to the base, wherein the tower has a longitudinal axis, a first end distal the base and a second end disposed within the base, and wherein the tower is configured to extend axially from the first end of the base, wherein the base comprises an adjustably buoyant elongate truss comprising a plurality of parallel legs and a plurality of stiffening members extending between the legs;
a nacelle pivotally coupled to the first end of the tower, wherein the nacelle is configured to rotate about an axis oriented perpendicular to the longitudinal axis of the tower; and
a rotor including a hub and a plurality of blades coupled to the hub, wherein the hub is coupled to the nacelle.

In an embodiment, the parallel legs and stiffening members are tubular members capable of being ballasted/de-ballasted and/or the truss has a tank capable of being ballasted/de-ballasted.

In an embodiment, the upper end of the tower comprises a pair of laterally spaced vertical support members, and wherein the nacelle is positioned between the support members.

In an embodiment, the nacelle is configured to rotate relative to the tower between a vertical position with the blades oriented parallel to a plane that is perpendicular to the axis of the tower and a horizontal position with the blades oriented parallel to a plane that is parallel to the axis of the tower.

In an embodiment, the tower slidingly engages a plurality of circumferentially spaced guide rails disposed within the elongate base.

In an embodiment, the second end of the base has a pinned coupling configured to engage the sea floor; and
wherein the base is configured to pivot about the pinned coupling.

In an embodiment, the second end of the base comprises tank configured to be selectively ballasted and de-ballasted; and
wherein the tank has at least one closeable port or valve.

In an embodiment, the base has a positive net buoyancy.

According to a second aspect of the present invention, there is provided a method for deploying and installing an offshore wind turbine, comprising:
(a) transporting a truss-tower assembly to an offshore installation site, wherein the truss-tower assembly includes:
   an elongate truss having a central axis, wherein the truss is adjustably buoyant and has a plurality of parallel legs and a plurality of stiffening members extending between the legs; and
   a tower moveably coupled to the truss;
(b) rotating the truss-tower assembly from a horizontal orientation to a vertical orientation at the installation site, wherein rotating the truss-tower assembly includes adjusting the buoyancy of the truss;
(c) engaging the sea floor with a lower end of the truss;
(d) coupling a nacelle to an upper end of the tower;
(e) coupling a rotor to the nacelle; and
(f) telescoping the tower axially from the truss.

In an embodiment, (a) thru (e) occur before (f).

In an embodiment, (a) comprises floating the truss-tower assembly out to the installation site.

In an embodiment, (a) comprises: loading the truss-tower assembly onto a barge; moving the truss-tower assembly offshore on the barge; offloading the truss-tower assembly from the barge after moving offshore; and floating the truss-tower assembly out to the installation site after offloading the truss-tower assembly from the barge.

In an embodiment, (e) occurs before (d).

In an embodiment, (b) comprise ballasting a tank at the lower end of the truss.

In an embodiment, (b) comprises pivoting the truss-tower assembly about a pin extending across an opening in a barge.

In an embodiment, the method further comprises: (g) connecting a plurality of guide wires to the truss, wherein each guide wire has a first end secured to the truss and a second end secured to the sea floor; and wherein (g) occurs before (d), (e), and (f).

In an embodiment, the method further comprises releasably locking the tower to the truss after (f).

Embodiments described herein comprise a combination of features and advantages intended to address various shortcomings associated with certain prior devices, systems, and methods. The various characteristics described above, as well as other features, will be readily apparent to those skilled in the art upon reading the following detailed description, and by referring to the accompanying drawings.

For a detailed description of the preferred embodiments of the invention, reference will now be made to the accompanying drawings in which:
Figure 1 is a front schematic view of two conventional offshore wind turbines;
Figure 2 is front view of an embodiment of an offshore wind turbine in accordance with the principles disclosed herein;
Figure 3 is a front view of an embodiment of a pinned connection for connecting the truss of Figure 2 to the sea floor;
Figure 4 is an enlarged cross-sectional view of the truss of Figure 2 taken along section 4-4;
Figure 5 is a top view of the support truss of Figure 2;
Figure 6 is a top view of an alternative embodiment of the truss;
Figure 7 is an enlarged view of Figure 5, illustrating the guide tubes and rails.
Figures 8-19 are sequential schematic views illustrating an embodiment of a method for the offshore transport and installation of the wind turbine of Figure 2;
Figure 20 is front view of an embodiment of an offshore wind turbine in accordance with the principles disclosed herein; and
Figures 21-33 are sequential schematic views illustrating an embodiment of a method for the offshore transport and installation of the wind turbine of Figure 19.

The following discussion is directed to various exemplary embodiments. However, one skilled in the art will understand that the examples disclosed herein have broad application, and that the discussion of any embodiment is meant only to be exemplary of that embodiment, and not intended to suggest that the scope of the disclosure, including the claims, is limited to that embodiment.

Certain terms are used throughout the following description and claims to refer to particular features or components. As one skilled in the art will appreciate, different persons may refer to the same feature or component by different names. This document does not intend to distinguish between components or features that differ in name but not function. The drawing figures are not necessarily to scale. Certain features and components herein may be shown exaggerated in scale or in somewhat schematic form and some details of conventional elements may not be shown in interest of clarity and conciseness.

In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection, or through an indirect connection via other devices, components, and connections. In addition, as used herein, the terms "axial" and "axially" generally mean along or parallel to a central axis (e.g., central axis of a body or a port), while the terms "radial" and "radially" generally mean perpendicular to the central axis. For instance, an axial distance refers to a distance measured along or parallel to the central axis, and a radial distance means a distance measured perpendicular to the central axis.

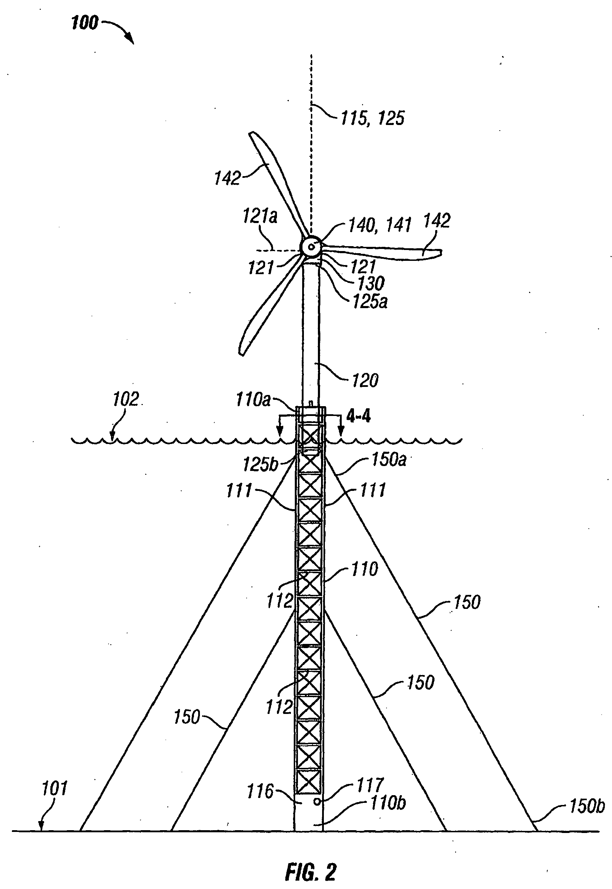

Referring now to Figure 2, an embodiment of an offshore wind turbine 100 in accordance with the principles disclosed herein is shown installed in a body of water 105. In general, turbine 100 is employed to harness wind energy to generate power (e.g., electrical and/or mechanical). In this embodiment, wind turbine 100 includes an elongate base 110 extending vertically upward from the sea floor 101, a tower 120 moveably coupled to truss 110, a nacelle 130 mounted to the upper end of tower 120 above the sea surface 102, a rotor 140 coupled to nacelle 130, and a plurality of guide wires 150 supporting base 110. The various power generating components such as the generator, gearbox, drive train, and brake assembly or turbine 100 are housed within nacelle 130.

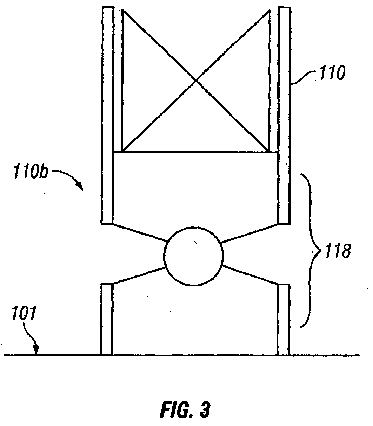

In this embodiment, base 110 is an elongate truss having a central or longitudinal axis 115, a first or upper end 110a, and a second or lower end 110b. As will be described in more detail below, truss 110 receives tower 120 through upper end 110a. Lower end 110b is coupled to the sea floor 101 and upper end 110a extends above the sea surface 102. In general, lower end 110b may be coupled to the sea floor 101 by any suitable means including, without limitation, a pinned connection, a rigid connection, etc. In Figure 2, lower end 110b comprises a ballasted tank 116 that functions as a gravity anchor to rigidly secure lower end 110b to the sea floor 101. In Figure 3, lower end 110b comprises a pinned coupling 118 disposed axially below ballasted tank 116 and the sea floor 101. The ballast in tank 116 provides the weight to urge coupling 118 into engagement with the sea floor 101. Pinned coupling 118 between lower end 110b and the sea floor 101 may employed to allow turbine 100 to pivot about lower end 110b relative to the sea floor 101 in response to changing wind, wave, and current loads. Movement of turbine 100 in this manner offers the potential to alleviate stress to truss 110 and reduces fatigue damage to truss 110 that may otherwise occur.

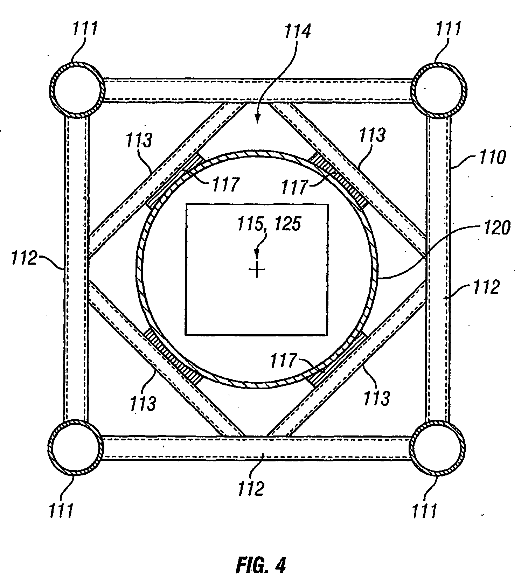

Referring now to Figures 2 and 4, truss 110 includes a plurality of laterally spaced vertically-extending legs 111 interconnected by a plurality of stiffening members 112 to form a truss frame. Together, legs 111 and members 112 define the radially outer perimeter of truss 110. As best shown in Figure 4, interior to the frame, truss 110 further includes a plurality of internally positioned guide members 113. Guide members 113 enhance the structural integrity of truss 110 and define a central through passage 114 extending through truss 110 from upper end 110a and sized to coaxially receive tower 120. In this embodiment, legs 111 and members 112, 113 are tubulars interconnected by welded joints or other means known in the art. In particular, legs 111 and members 112, 113 are sealable tubulars that may be ballasted with water or de-ballasted with air, and thus, provide a means for adjusting buoyancy of truss 110 and turbine 100 as needed.

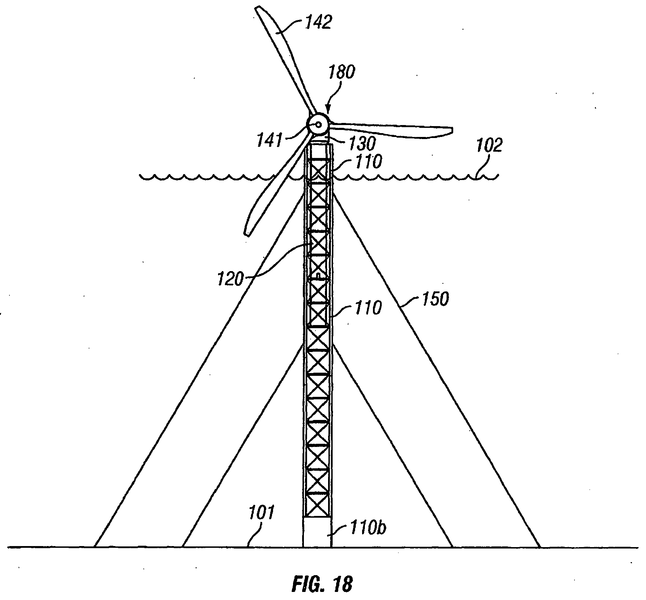

A plurality of uniformly circumferentially-spaced vertical rails 117 extending axially from upper end 1l0a and are coupled to guide members 113. Tower 120 is coaxially inserted into truss 110 at upper end 110a and engages rails 117. As will be described in more detail below, tower 120 telescopes from truss 110. Tower 120 is axially moveable relative truss 110 along rails 117, and thus, may telescope from truss 110 between a fully retracted position as shown in Figure 18 and a fully extended position shown in Figure 2. Tower 120 is disposed in the fully retracted position during deployment, and transitioned to the fully extended position during installation after rotor 140 and nacelle 130 have been coupled thereto.

In general, tower 120 may be transitioned between the fully retracted and fully extended positions by any suitable means. For example, tower 120 may be transitioned between the fully retracted position and the fully extended position by de-ballasting and ballasting tower 120 (i.e., buoyancy forces are used to raise tower 120 relative to truss 110). As another example, tower 120 may have an inherent positive net buoyancy such that tower 120 moves upward through truss 110 upon release of a coupling mechanism that maintains tower 120 in the fully retracted position. As yet another example, tower 120 may be transitioned between the fully retracted position and the fully extended position with a lifting device such as a crane. As still yet another example, a motor and drive mechanism such as the jacking mechanism employed to move the legs on a jackup platform may be used to transition tower 120 between the fully retracted and fully extended positions. In embodiments where tower 120 is transitioned between the fully retracted position and the fully extended positions via buoyancy forces or with a crane, rails 117 preferably comprise guides that slidingly engage the outer surface of tower 120. However, in embodiments wherein tower 120 is transitioned between the fully retracted position and the fully extended positions via a jacking mechanism, rails 117 may function as guides that slidingly engage tower during jacking operations, or alternatively, may comprise toothed racks or the like that positively engage a pinion or stepping jack coupled to tower 120.

Once tower 120 has been fully extended, it is releasably locked relative to truss 110 such that tower 120 is restricted and/or prevented from moving relative to truss 110 along rails 117 during operation of turbine 100. Tower 120 may be locked to truss 110 by any suitable releasable mechanism, coupling or device such as removable bolts. When desired, for instance during disassembly or maintenance of turbine 100, the coupling mechanism may be released or removed to again enable tower 120 to move axially downward relative to truss 110 along rails 117.

Referring again to Figure 2, truss 110 also includes tank 116 at lower end 110b. Tank 116 includes at least one closeable port or valve 117 that allows tank 116 to be closed from and opened to the surrounding environment. As will be described in more detail below, during deployment of truss 110, valve 117 remains closed and tank 116 is filled with a gas such as air to give truss 110 to provide buoyancy. At the installation site, valve 117 is opened to flood tank 116 and sink and anchor truss 110 to the sea floor 101. Thus, tank 116 may be ballasted and deballasted. Tank 116 preferably comprises a plurality of sub-compartments that are independently ballasted and deballasted, each sub-compartment having its own closeable port or valve.

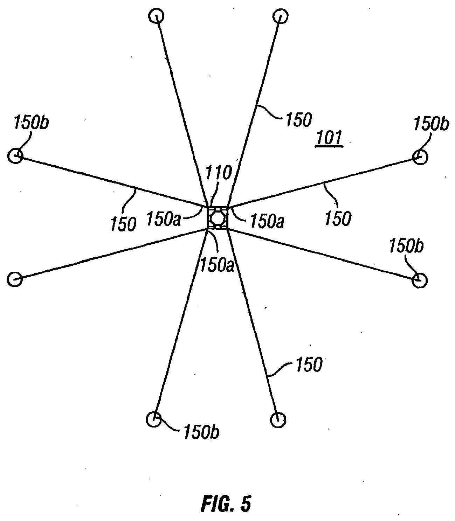

As best shown in Figure 2 and 5, truss 110 is held in position with guide wires 150. Each guide wire 150 has a first or upper end 150a secured to truss 120 between ends 120a, b and a second or lower end 150b secured to the sea floor 101. In general, lower ends 150b of wires 150 may be secured to the sea floor 101 by any suitable means including, without limitation, a gravity anchor, a pyle, or combinations thereof. Guide wires 150 preferably comprise resilient elastic material(s) that allow wires 150 to stretch and retract as truss 110 moves under changing loads from the surrounding water 105. Examples of such elastic materials include, without limitation, wire, composite or polyester ropes. Such elastic guide wires 150 offer the potential to minimize the effects fatigue to guide wires 150, thereby prolonging their service life. Further, such elastic guide wires 150 may help dampen vibrations induced in truss 110 from the rotation of blades 142 and other forces acting on turbine 100 and prevent resonant vibration of turbine 100.

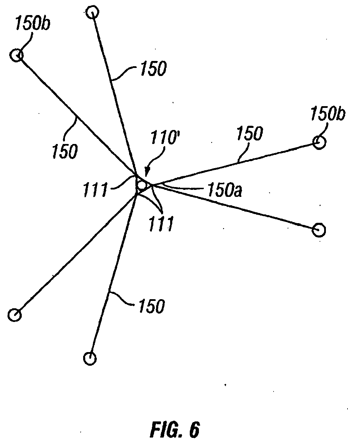

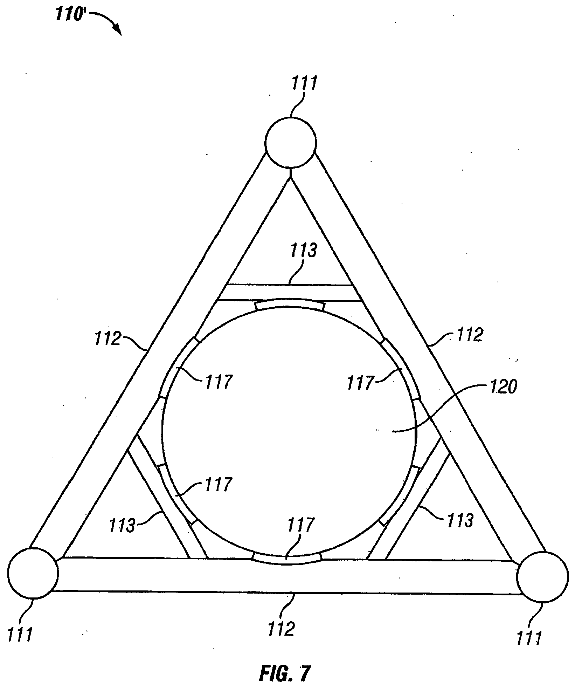

In the embodiment shown in Figures 2, 4, and 5, truss 110 includes four legs 111 and has a rectangular or square shape in top view. However, in other embodiments, the truss (e.g., truss 110) may include a different number of legs (e.g., legs 111) and/or have another suitable geometry in top view. For example, in Figures 6 and 7, an embodiment of a truss 110' including three legs 111 arranged in a triangle in top view is shown. Otherwise, truss 110' is the same as truss 110.

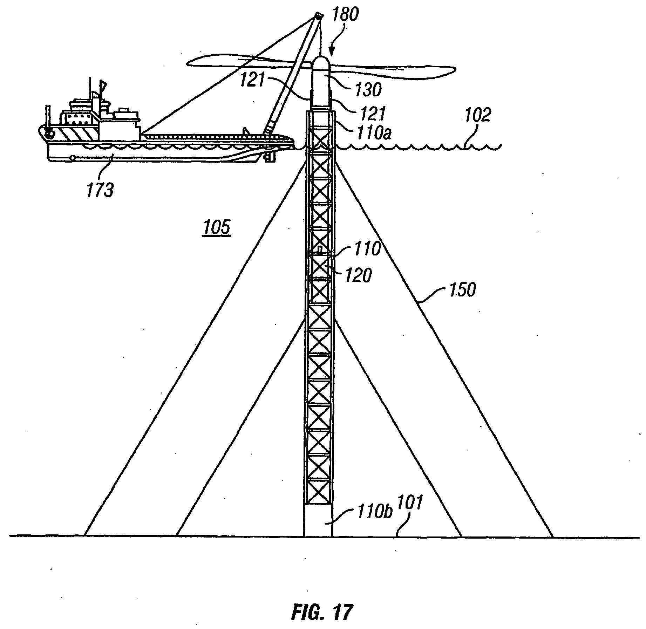

Referring again to Figures 2 and 4, tower 120 has a central axis 125, a first or upper end 125a, and a second or lower end 125b. Lower end 125b is coaxially inserted into truss 110 with the radially outer surface of tower 120 engaging rails 117 previously described. Upper end 120a is coupled to nacelle 130 with a pair of axially-extending parallel support members 121. Support members 121 are laterally spaced apart a sufficient distance to enable nacelle 130 to be slidingly disposed therebetween and coupled thereto. In this embodiment, nacelle 130 is pivotally coupled to tower 120 such that nacelle 130 may be rotated about an axis 121a oriented perpendicular to axis 125 in front view. In particular, nacelle 130 may be rotated about axis 121a relative to tower 120 between a first position, in which the longitudinal axis of nacelle 130 is oriented generally parallel to axis 125 as shown in Figure 17, and a second position, in which the longitudinal axis of nacelle 130 is oriented generally perpendicular to axis 125 as shown in Figure 1. The ability to pivot nacelle 130 relative to tower 120 enables nacelle 130 to be positioned vertically upright to generally position rotor 140 away from the sea surface 102 and water 105 during installation and maintenance of rotor 140, nacelle 130, and/or the generating components within nacelle 130. In this embodiment, an elevator 122 is moveably disposed within tower 120 and enables relatively easy access to rotor 140, nacelle 130 and the components therein for repair and/or maintenance.

Referring still to Figure 2, rotor 140 includes a hub 141 and a plurality of blades 142 extending radially outward therefrom. Hub 141 is coupled to the generator components housed within nacelle 130. In particular, hub 141 is coupled to a generator via a rotatable shaft and a gear box. As wind loads act on blades 142, blades 142 rotate hub 141. This, in turn rotates the shaft. The generator, coupled to the shaft, converts the rotational mechanical energy of the shaft into electricity that may then transmitted to a remote location, such as an onshore electricity grid via electrical wiring or cables.

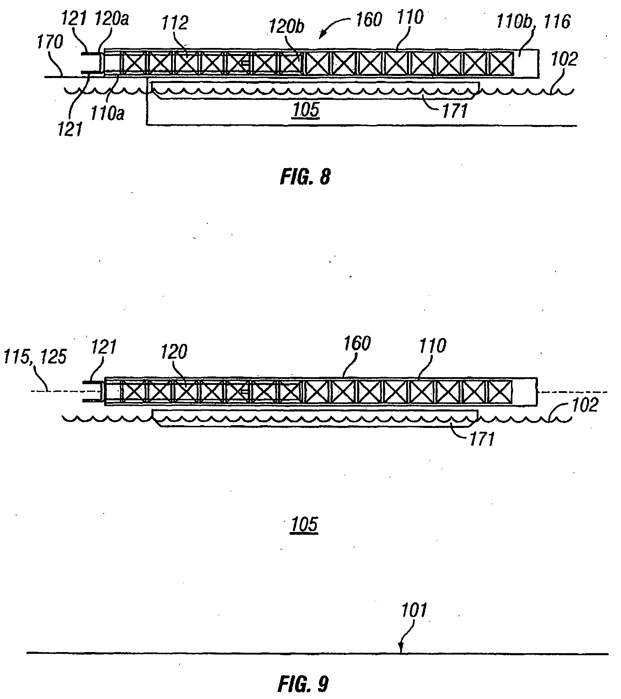

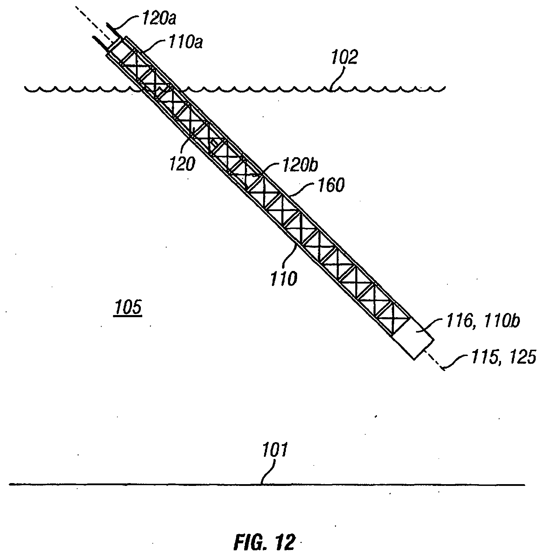

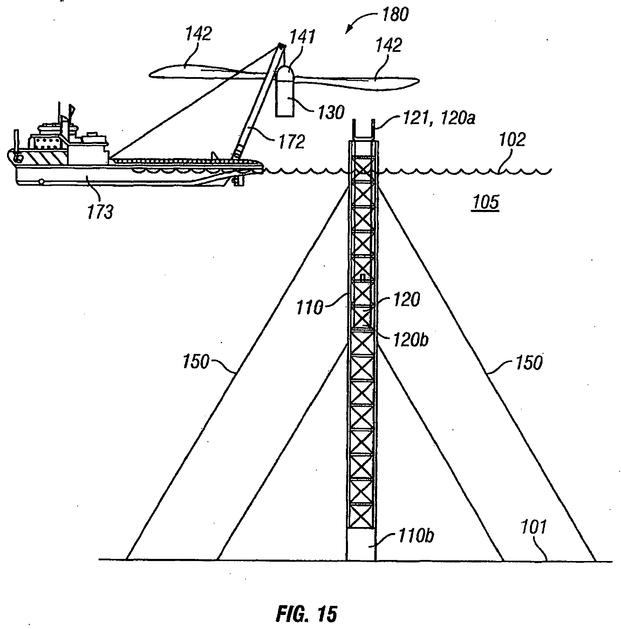

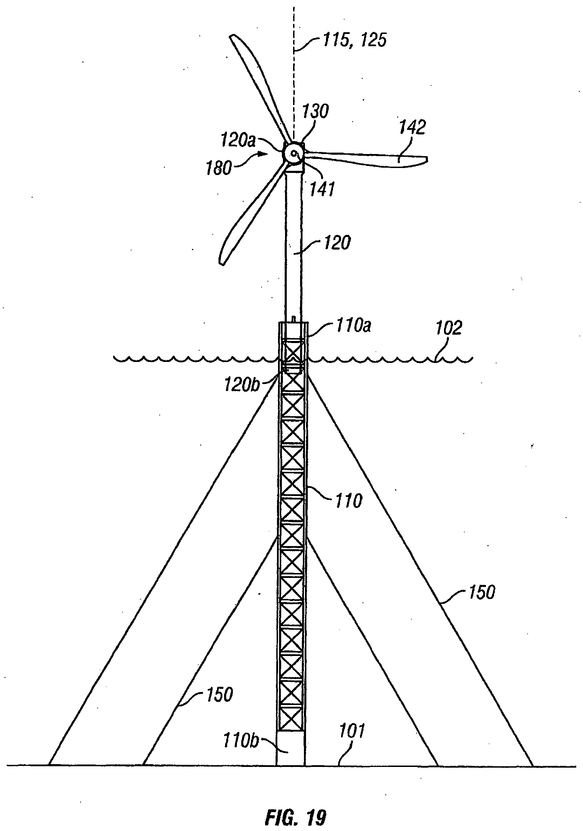

Referring now to Figures 8-19, an embodiment of a method for the offshore transport and installation of wind turbine 100 is shown. In this embodiment, a truss-tower assembly 160 comprising tower 120 coaxially disposed in truss 110 is transported to the installation site along the sea surface 102 as shown in Figures 8-11. At the installation site, truss-tower assembly 160 is transitioned to an upright position and secured to the sea floor 101 as shown in Figures 12-14. Next, the nacelle 130 (including the generating components housed therein) and rotor 140 are mounted to upper end 120a of tower 120 to complete the assembly of wind turbine 100 as shown in Figures 15-18. With wind turbine 100 fully assembled, tower 120 is transitioned to the extended position and locked in positioned relative to truss 110 for subsequent power generation operations as shown in Figures 18 and 19.

Referring first to Figures 8 and 9, truss-tower assembly 160 is moved from a land into the water 105 via a barge 171. In particular, assembly 160 is staged at a loading dock 170, and barge 171 is positioned adjacent dock 170. Next, truss-tower assembly 160 is disposed on barge 171. In general, assembly 160 may loaded onto barge 171 with a crane, rolled onto barge 160 with rollers, or other suitable means known in the art. Once truss-tower assembly 160 is loaded onto barge 171, barge 171 is moved offshore a suitable distance from dock 170.

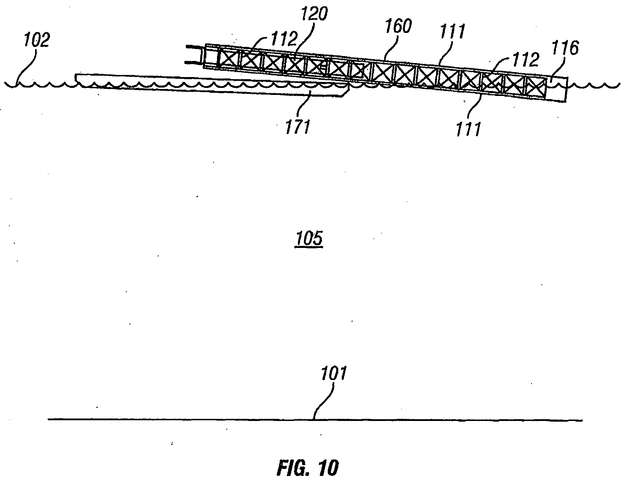

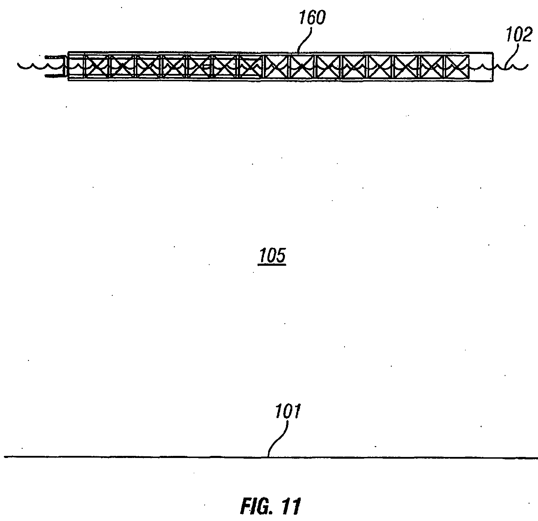

Moving now to Figures 10 and 11, once offshore, truss-tower assembly 160 is offloaded from barge 171 into water 105 and floated out to the offshore installation site. Truss-tower assembly 160 may be offloaded from barge 171 by loading assembly 160 onto rails disposed on the deck of barge 171, de-ballasting one end of barge 171, and then sliding assembly 160 along the rails off the deballasted end of barge 171 as shown in Figure 10. Alternatively, the entire barge 171 may be deballasted below the sea surface 102 and assembly 160 simply floated off barge 171.

For float out offshore transport, assembly 160 is configured to have a positive net buoyancy for offshore transport. As previously described, legs 111 and members 112, 113 may be de-ballasted to provide buoyancy. In addition, for offshore transport, tank 116 is filled with air and valve 117 is closed. Together, legs 111, members 112, 113, and tank 116 provides sufficient buoyancy to enable assembly 160 to float and be towed along the sea surface 105 to the offshore installation site. Tower 120 may also be configured to provide buoyancy. For example, tower 120 may include sealed or ballast adjustable compartments.

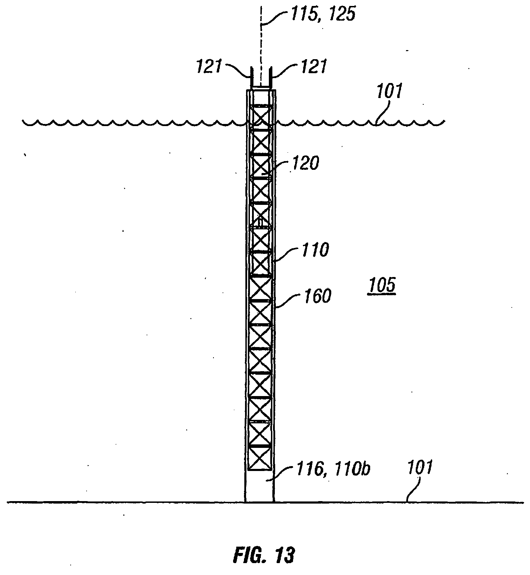

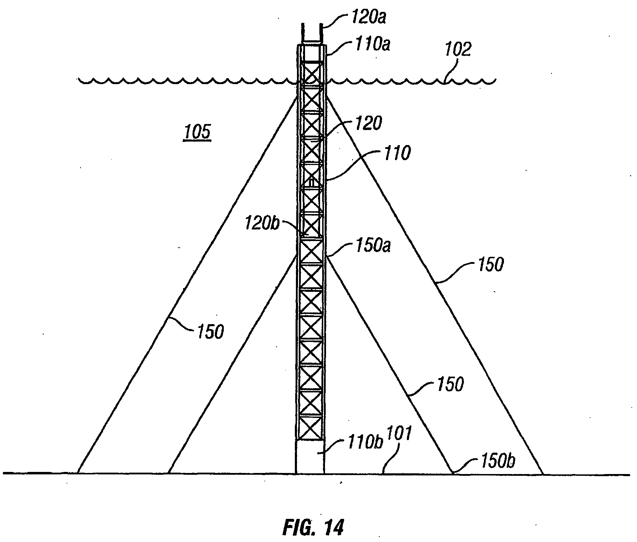

Referring now to Figures 11-14, upon arrival at the installation site, truss-tower assembly 160 is transitioned from the horizontal float out position to a vertical upright position, and lower end 110b is secured to the sea floor 101. First, as shown in Figures 11-13, valve 117 of buoyancy tank 116 is opened, and tank 116 is flooded (i.e., ballasted), causing tank 116 and lower end 110b of truss 110 (and hence assembly 160) to sink towards the sea floor 101. Due to the buoyant nature of legs 111 and members 112, 113, and with tank 116 is ballasted, tank 116 will land on the sea floor 101 and assembly 160 will transition to the upright configuration shown in Figure 13. To complete installation of truss-tower assembly 160, lower end 110b is moved into engagement with the sea floor 101 and guide wires 150 are installed as shown in Figure 14.

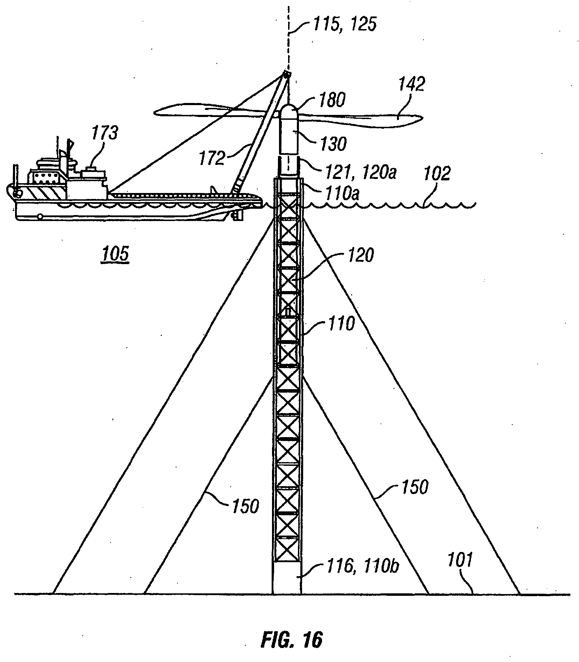

Moving now to Figures 15-18, with assembly 160 secured in position and tower 120 in the retracted position, a nacelle-rotor assembly 180 comprising nacelle 130 (and the generating components housed therein) and rotor 140 is mounted to upper end 120a of tower 120. Thus, nacelle 130, the generating components housed within nacelle 130, and rotor 140 are preassembled before being attached to tower 120. First, nacelle-rotor assembly 180 is lifted and positioned generally above and coaxially aligned with tower 120 as shown in Figures 15 and 16. Assembly 180 is oriented such that rotor 140 is positioned above nacelle 130. In this embodiment, a crane 172 mounted to a floating vessel 173 is used to lift, position, and orient assembly 180. Next, as shown in Figure 17, nacelle-rotor assembly 180 is lowered to position nacelle 130 between support members 121 of tower 120, and nacelle 130 is pivotally coupled to support members 121. Rotor-nacelle assembly 180 is subsequently pivoted about axis 121a to move rotor 140 downward and into position to face oncoming wind. In particular, rotor 140 is positioned such that blades 142 extend generally parallel to a plane normal to the sea surface 102 as shown in Figure 18. Crane 172 is preferably used to controllably rotate nacelle-rotor assembly 180.

With nacelle-rotor assembly 180 securely attached to support members 121, tower 120 is transitioned from the fully retracted position to the fully extended position as shown in Figures 18 and 19. As previously described, tower 120 may be transitioned to the fully extended position by a variety of suitable means. For example, if tower 120 has a positive net buoyancy, a coupling mechanisms that maintains tower 120 in the fully retracted position maybe released, thereby allowing tower 120 naturally rises upward to the fully extended position. Alternatively, tower 120 may be lifted, for example, using crane 172 or with a jacking mechanism. Regardless of the means to extend tower 120, once in the fully extended position, tower 120 is secured in position and prevented from moving relative to truss 110. At this point, installation of offshore wind turbine 100 is complete. Unless crane 172 is used to lift tower 120 into the fully extended position, crane 172 may be detached from nacelle-rotor assembly 180 once it is secured to support members 121 and controllably pivoted downward.

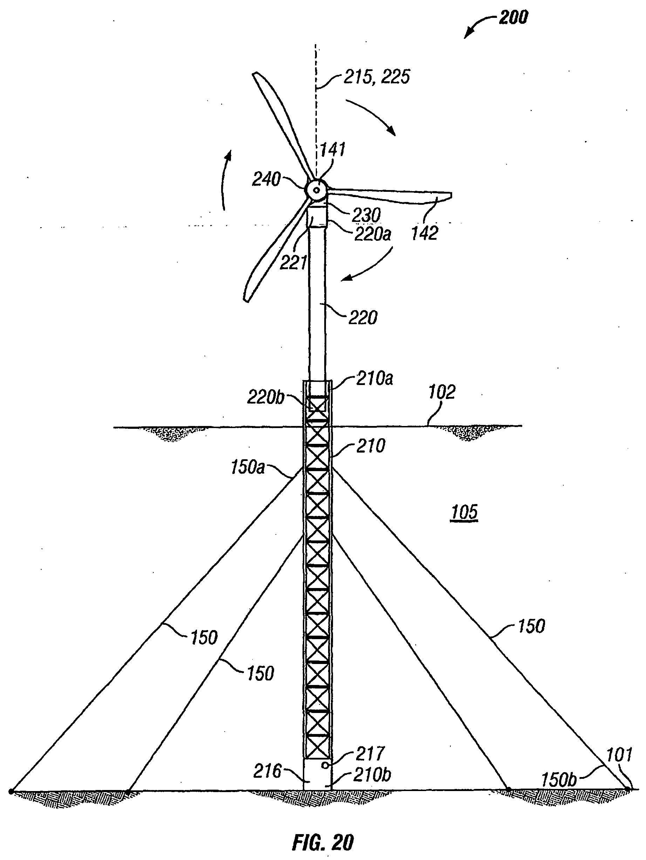

Referring now to Figure 20, an embodiment of an offshore wind turbine 200 in accordance with the principles disclosed herein is shown installed in body of water 105. In general, turbine 200 is employed to harness wind energy to generate power (e.g., electrical and/or mechanical). In this embodiment, wind turbine 200 includes a support truss 210 extending vertically upward from the sea floor 101, a tower 220 moveably coupled to truss 210, a nacelle 230 mounted to the upper end of tower 220 above the sea surface 102, a rotor 240 coupled to nacelle 230, and a plurality of guide wires 150 as previously described supporting truss 210. The various power generating components such as the generator, gearbox, drive train, and brake assembly or turbine 200 are housed within nacelle 230.

Truss 210 is substantially the same as truss 110 previously described. Namely, truss 210 is an elongate frame having a central or longitudinal axis 215, a first or upper end 210a, and a second or lower end 210b. As will be described in more detail below, tower 220 is retractable and extendable through upper end 210a. Lower end 210b is coupled to the sea floor 101 and upper end 210a extends above the sea surface 102. In general, lower end 210b may be coupled to the sea floor 101 by any suitable means including, without limitation, a pinned connection or a rigid connection as previously described. In addition, truss 210 is formed by a plurality of legs 111, stiffening members 112, and guide members 113, each as previously described. However, unlike truss 110 previously described, in this embodiment, legs 111 and members 112, 113 may or may not be filled with air. A plurality of uniformly circumferentially-spaced vertical rails 117 as previously described are coupled to guide members 113. Tower 220 is coaxially inserted into truss 210 at upper end 210a and engages rails 117.

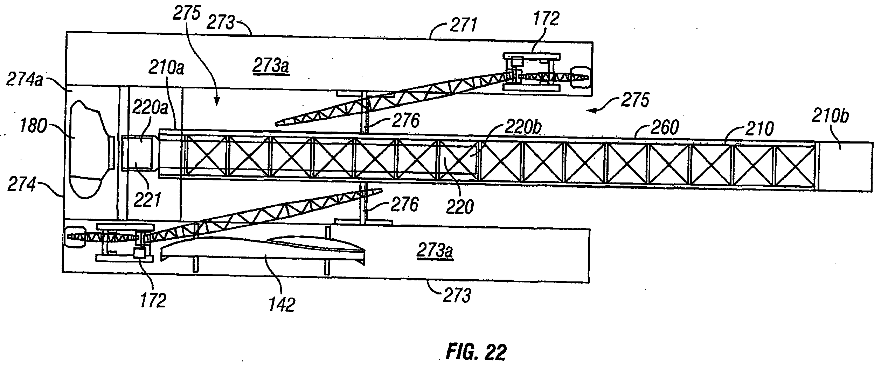

Tower 220 is axially moveable relative truss 210 along rails 117, and thus, may telescope from truss 210 between a fully retracted position as shown in Figure 22 and a fully extended position shown in Figure 20. As will be described in more detail below, tower 220 is disposed in the fully retracted position during deployment, and transitioned to the fully extended position after installation of nacelle 230 and rotor 240. In this embodiment, tower 220 is transitioned between the fully retracted and fully extended positions with a jacking mechanism such as those used to move the legs on a jackup platform. However, in other embodiments, tower 220 may be transitioned between the fully retracted and fully extended positions via buoyancy. Once tower 220 has been fully extended, it is releasably locked relative to truss 210 such that tower 220 is restricted and/or prevented from moving relative to truss 210 during operation of turbine 200. Tower 220 may be locked to truss 210 by any suitable releasable mechanism, coupling or device such as removable bolts. When desired, for instance during disassembly or maintenance of turbine 200, the coupling mechanism may be released or removed to allow the jacking mechanism to lower tower 220 axially downward relative to truss 210.

Referring again to Figure 20, truss 210 also includes a ballast tank 216 at lower end 210b. Tank 216 may be filled with removable ballast, fixed ballast, water ballast, solid ballast, or combinations thereof. A closeable port 217 is included in this embodiment to allow ballast to be added and removed from tank 216. In this embodiment, tank 216 is not relied upon for buoyancy, and thus, tank 216 may be filled with ballast at any time prior to installation. As will be described in more detail below, during installation of turbine 200, the ballast in tank 216 enables truss 210 to be sunk into engagement with the sea floor 101. Truss 210 is held in position with guide wires 150 as previously described.

Referring still to Figure 20, tower 220 is substantially the same as tower 120 previously described. Namely, tower 220 has a central axis 225, a first or upper end 220a, and a second or lower end 220b. Lower end 220b is coaxially inserted into truss 210 with the radially outer surface of tower 220 engaging rails 117. However, in this embodiment, upper end 220a does not comprise a pair of parallel support members 121. Rather, in this embodiment, upper end 220a comprises a base 221 to which nacelle 230 is mounted. In this embodiment, nacelle 230 sits atop base 221 and is attached thereto.

Referring still to Figure 20, rotor 240 is the same as rotor 140 previously described. Specifically, rotor 240 includes a hub 141 and a plurality of blades 142 extending radially outward therefrom. Hub 141 is coupled to the generator components housed within nacelle 230. In particular, hub 141 is coupled to a generator via a rotatable shaft and a gear box. As wind loads act on blades 142, blades 142 rotate hub 141, which, in turn, rotates the shaft. The generator, coupled to the shaft, converts the rotational mechanical energy of the shaft into electricity that may then transmitted to a remote location, such as an onshore electricity grid via electrical wiring or cables.

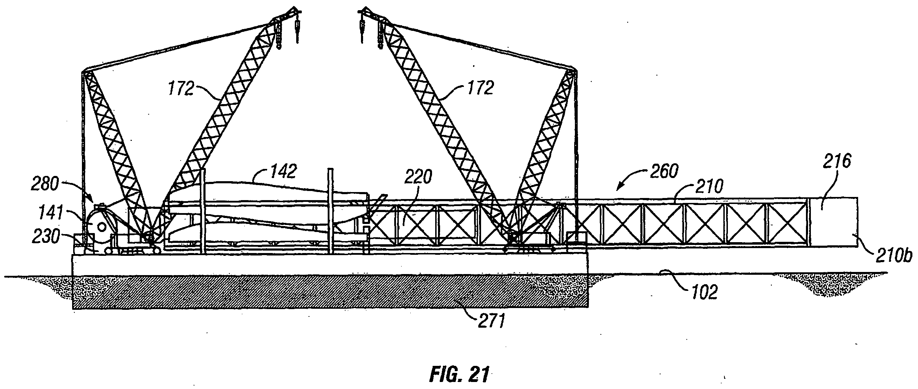

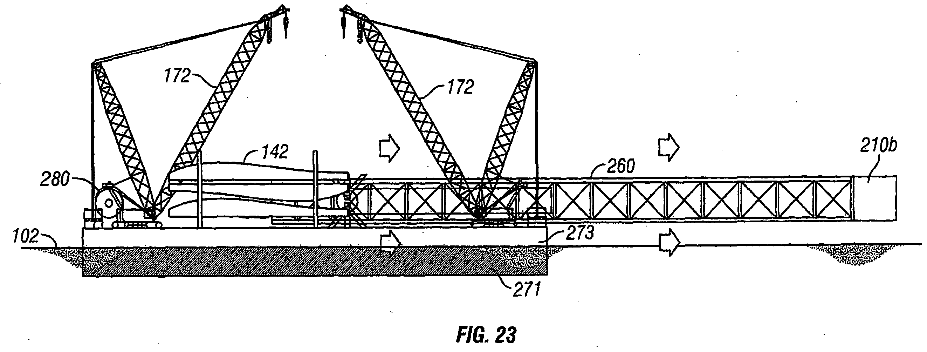

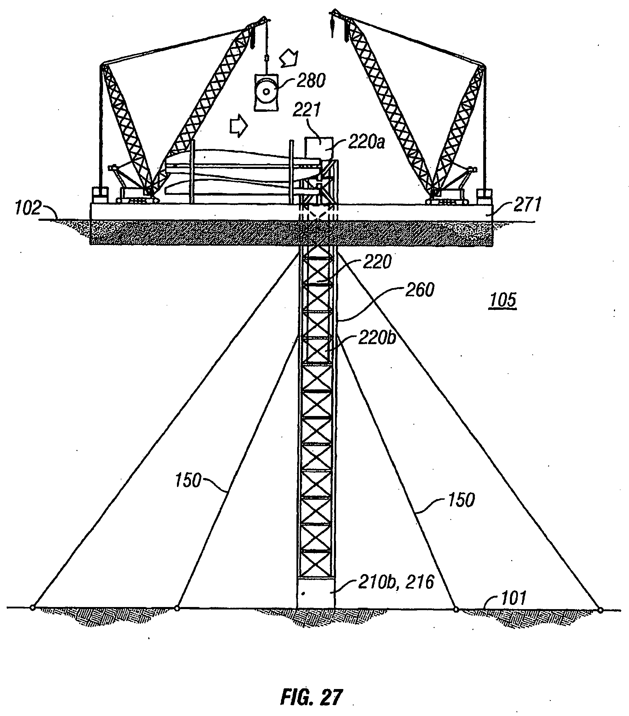

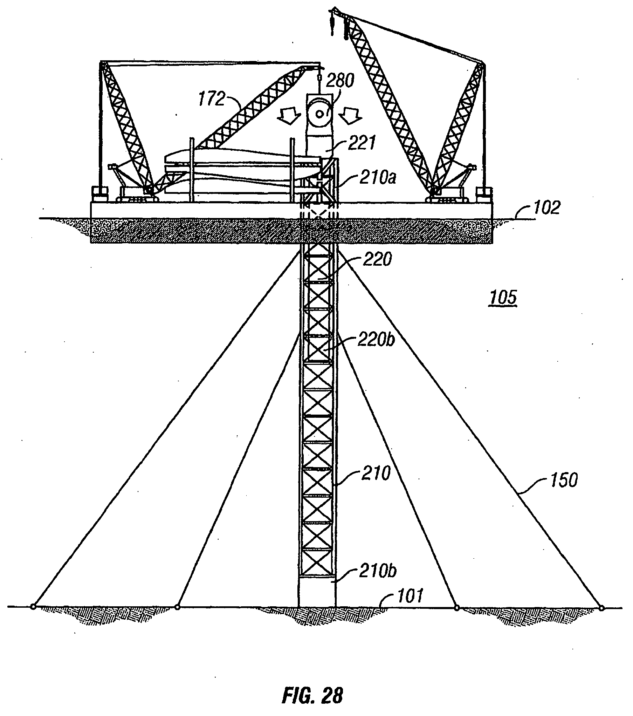

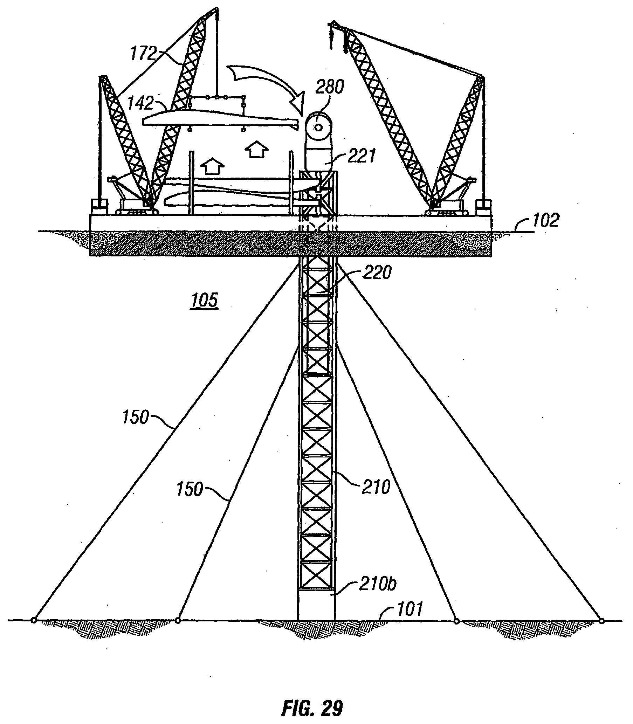

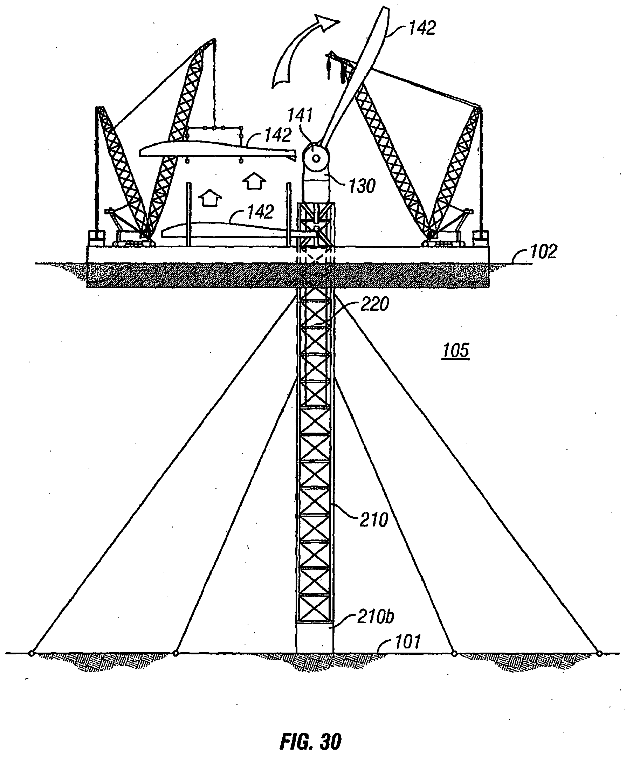

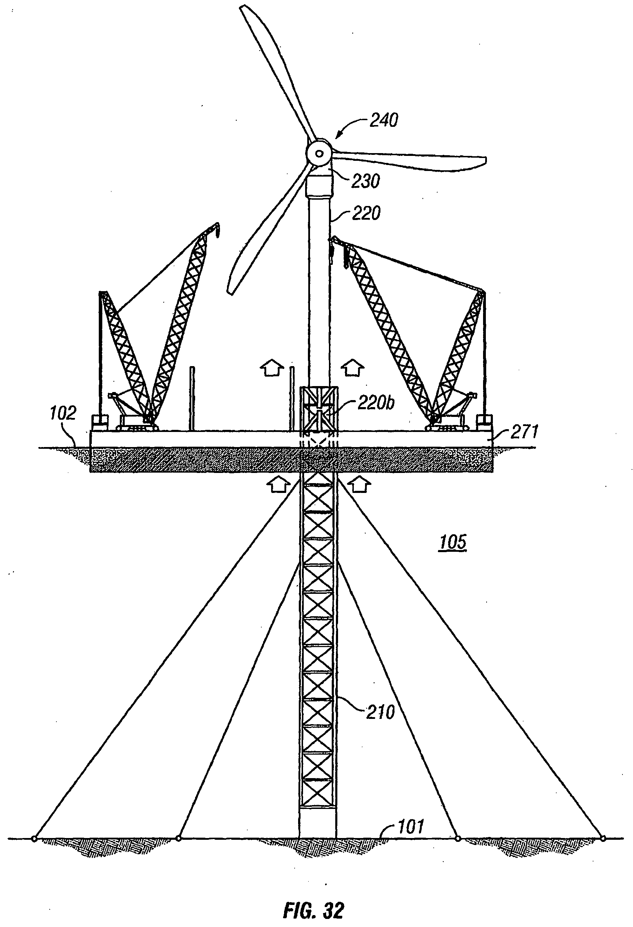

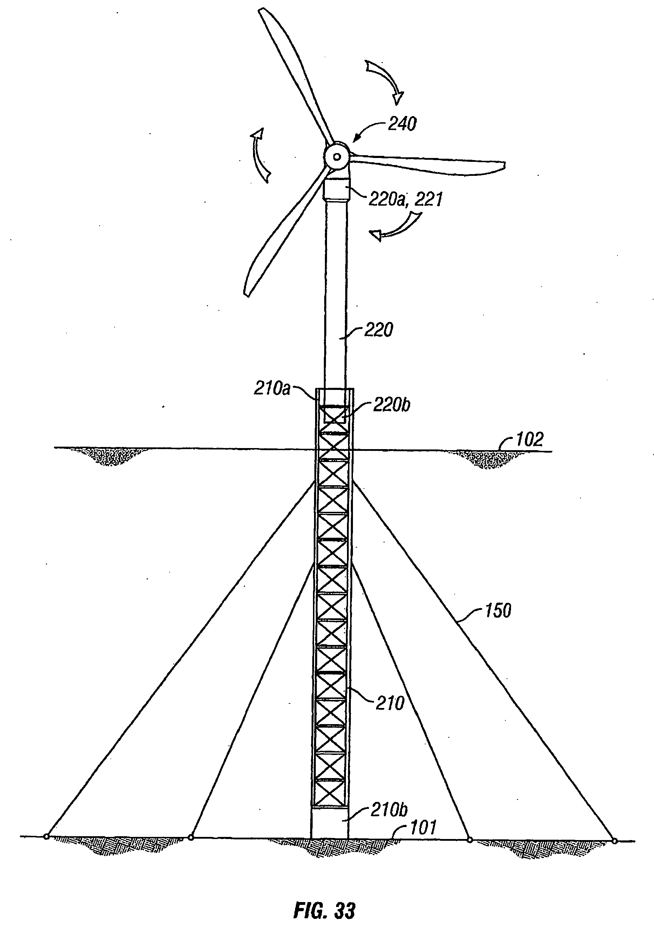

Referring now to Figures 21-33, an embodiment of a method for the offshore transport and installation of wind turbine 200 is shown. In this embodiment, the various components of wind turbine 200 are transported to the installation site on a barge 271 as shown in Figures 21 and 22. At the installation site, a truss-tower assembly 260 is offloaded from barge 271, transitioned to an upright position, and secured to the sea floor 101 as shown in Figures 23-26. Next, a nacelle-hub assembly 280 (including nacelle 230, the generating components housed therein, and hub 141 coupled thereto) is mounted to upper end 220a of tower 220 as shown in Figures 27 and 28, followed by attachment of blades 142 as shown in Figures 29-31. With wind turbine 200 assembled, tower 220 is transitioned to the extended position and locked in positioned relative to truss 210 for subsequent power generation operations as shown in Figures 32 and 33.

Referring first to Figures 21 and 22, truss-tower assembly 260, nacelle-hub assembly 280, and blades 142 are loaded onto a barge 271. These components may be staged on a loading dock (e.g., dock 170) and loaded onto barge 271 from the loading dock (e.g., dock 170) in any of the manners previously described. In this embodiment, a pair of cranes 172 are also disposed on barge 271.

As best shown in Figure 22, in this embodiment, barge 271 includes a pair of parallel laterally spaced pontoons 273 and a cross-member 274 extending perpendicularly therebetween. Cross-member 274 extends between ends of pontoons 273, thereby defining an opening 275 in barge 271 between pontoons 273 and extending from cross-member 274 to the opposite ends of pontoons 273. Decks 273a, 274a are disposed on the top of pontoons 273 and cross-member 274, respectively. Opening 275 provides direct access to the sea surface 102 through barge 271. A rotatably, cylindrical pin 276 extends between pontoons 273 across opening 275. In this embodiment, nacelle-hub assembly 280 is loaded onto deck 274a, and blades 142 and cranes 172 are disposed on pontoon decks 173a. Truss-tower assembly 260 is loaded onto barge 271 such that it is cantilevered over opening 275 and supported by deck 274a and pin 276. In particular, upper ends 210a, 220a are supported on deck 274a, and pin 276 is disposed between ends 210a, 220a and ends 210b, 220b, respectively. With the components of wind turbine 200 loaded onto barge 271 as shown in Figures 21 and 22, barge 271 is moved offshore to the installation site. Thus, in this embodiment, the components of wind turbine 200 are transported to the installation site on barge 271.

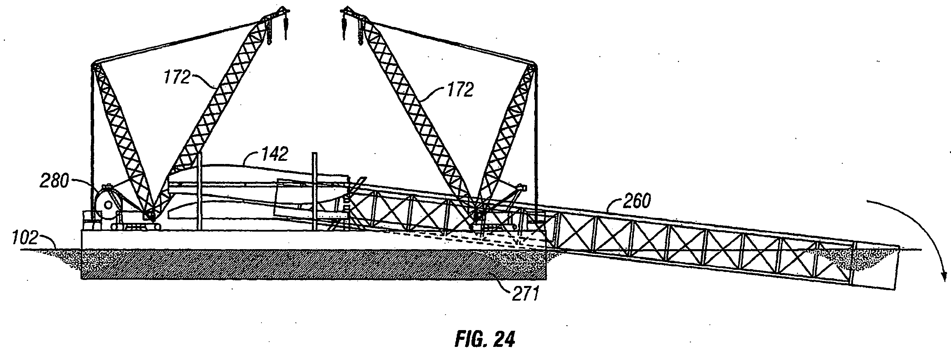

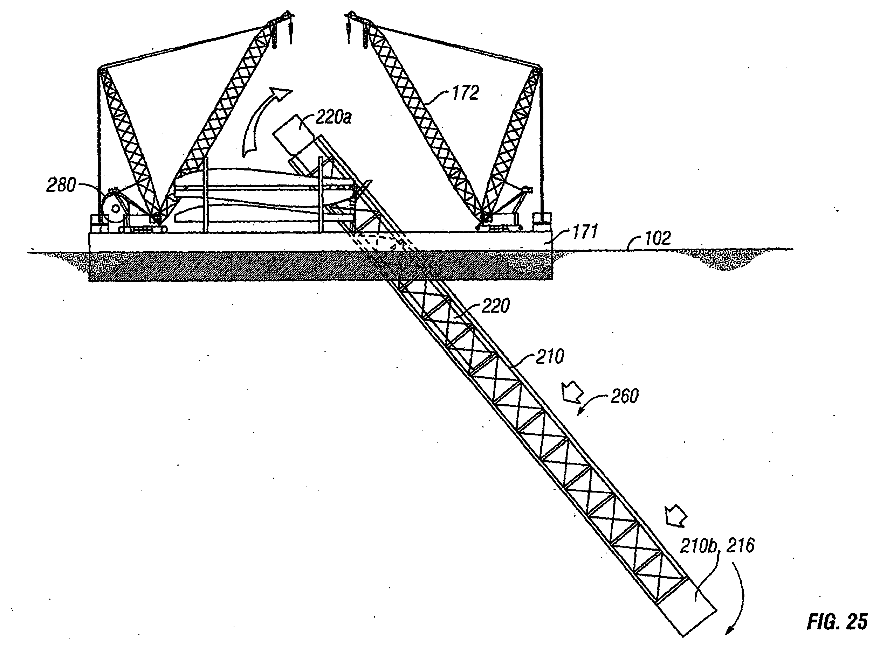

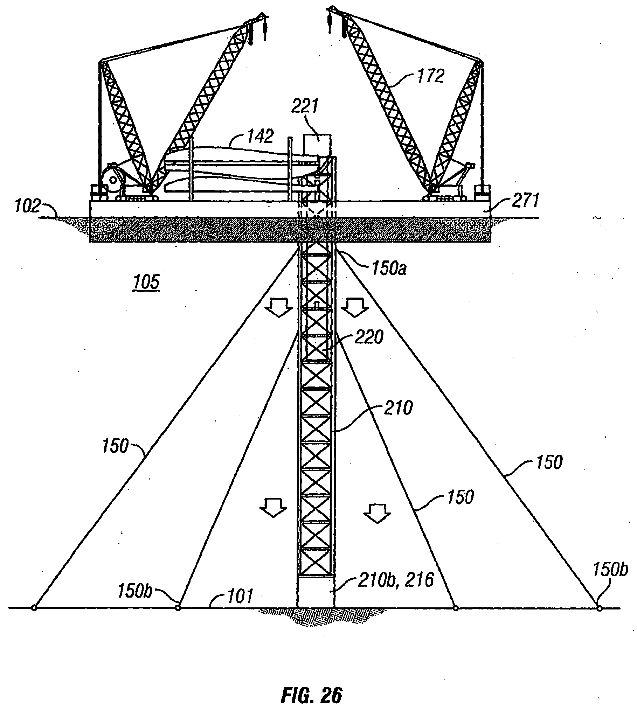

Moving now to Figures 23-26, at the offshore installation site, truss-tower assembly 260 is offloaded from barge 271 into water 105, transitioned a generally horizontal position to a vertical, upright position, and secured to the sea floor 101. First, tank 216 is ballasted if it has not already been ballasted, and then truss-tower assembly 260 is pushed axially off deck 274a and across pin 276. In this embodiment, pin 276 is allowed to roll along tracks disposed on the inside of pontoons 273. As upper ends 210a, 220a move off of deck 274a and truss-tower assembly 260 rolls across pin 276, lower end 210b moves axially away from pin 276 and upper end 210a moves axially towards pin 276. When the lower end 210b is sufficiently spaced from pin 276, truss-tower assembly 260 will pivot or rotate about pin 276 with end 210b swinging downward and end 210a swinging upward as shown in Figures 24 and 25. Lower end 210b swings downward and into engagement with the sea floor 101. To complete installation of truss-tower assembly 260, lower end 210b is moved into engagement with the sea floor 101 and guide wires 150 are installed as shown in Figure 26. Barge 271 may be used to urge truss-tower assembly 260 to the full upright position after lower end 210b engages the sea floor 101 and/or wires 150 may be used to move truss-tower assembly 260 to the full upright position.

Moving now to Figures 27 and 28, with assembly 260 secured in position and tower 120 in the retracted position, nacelle-hub assembly 280 is mounted to upper end 220a of tower 220. Thus, nacelle 230, the generating components housed within nacelle 230, and hub 141 are preassembled before being attached to tower 220. First, nacelle-hub assembly 280 is lifted and position above tower 220 as shown in Figure 27. In addition, assembly 280 is oriented such that it may be lowered onto surface 222 and secured to 221. For example, if bolts are used to secure assembly 280 to base 221, then the holes in assembly 280 and base 221 through which the bolts are disposed must be aligned. Next, as shown in Figure 28, nacelle-hub assembly 280 is lowered onto base 221 and secured thereto. In this embodiment, a crane 172 is used to lift, position, orient, and lower assembly 280.

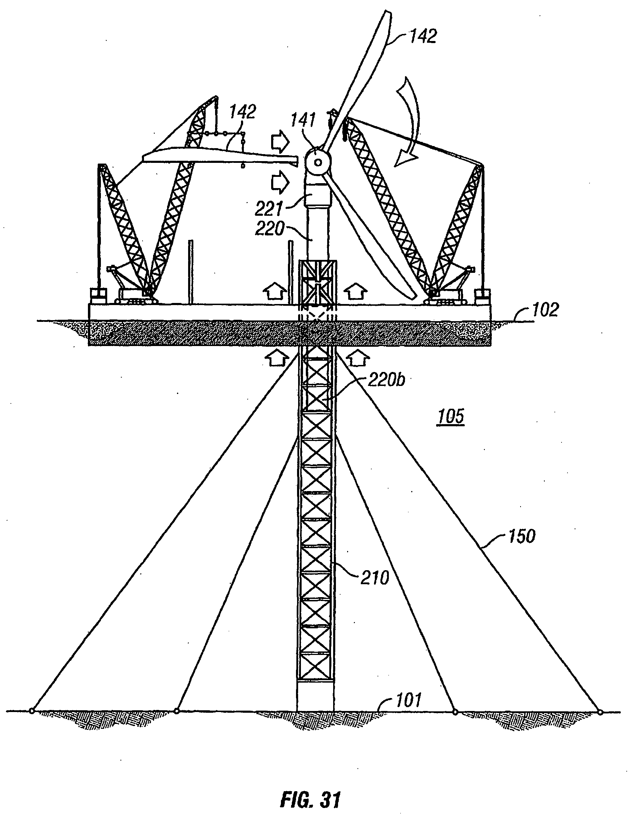

With nacelle-hub assembly 280 securely attached to upper end 220a, blades 142 are attached to hub 141 as shown in Figures 29-31. In this embodiment, cranes 172 are used to lift and position blades 142 so that they may be secured to hub 141. As best shown in Figure 31, tower 220 may need to be at least partially raised during installation of blades 142 to provide sufficient clearance between the blades 142 already attached to hub 141 and barge 271. After all the blades 142 are attached to hub 141, assembly of wind turbine 200 is complete. Next, tower 220 is transitioned to the fully extended position using the jacking system as shown in Figures 32 and 33, and barge 172 is moved away from the installation site.

In the manner described, embodiments described herein provide systems and methods for transporting, deploying and installing offshore turbines. As best shown in Figures 2 and 20, lower ends 120b, 220b of towers 120, 220, respectively, are positioned proximal the sea surface 102 and upper ends 110a, 210a of trusses 110, 210, respectively, when towers 120, 220 are in their fully extended positions. Thus, once turbine 100, 200 is installed and tower 120, 220, respectively, is transitioned to the fully extended position, truss 110, 210 is generally open and transparent to currents and waves in the surrounding water 105. In particular, the gaps between legs 111 and members 112, and the open space within truss 110, 210 allows water 105 to flow freely through truss 110, 210 with minimal impedance. This is in contrast to conventional towers 20, 25 previously described and shown in Figure 1. Water cannot pass freely through towers 20, 25, and must flow around towers 20, 25. Consequently, without being limited by this or any particular theory, forces exerted on towers 20, 25 by the surrounding water are significantly higher than those exerted on similarly sized trusses 110, 210, thereby necessitating the mass of towers 20, 25 be significantly higher as well. In other words, embodiments of trusses 110, 210 described herein need not have a mass comparable to that of similarly sized towers 20, 25 because trusses 110, 210 will experience less loads from the surrounding water than towers 20, 25. As a result, trusses 110, 210, which are formed by a plurality of tubular elements joined via welding, offer the potential for a less expensive structure than towers 20, 25. In addition, the ability to telescope towers 120, 220 from trusses 110, 210, respectively, offers the potential to simplify deployment, installation, and maintenance of turbines 100, 200, respectively. In addition, the ability to telescope towers 120, 220 from trusses 110, 210, respectively, enables nacelle 130, 230, and rotor 140, 240 to be installed and accessed proximal the sea surface 102. This offers the potential to reduce installation and maintenance costs since specialized heavy lift vessels and equipment may not be needed, and further, enhances safety since installation and maintenance operations do not need to be performed at high elevations. Furthermore, at least with regard to turbine 100, the tubular nature and buoyancy of truss 110 enables truss-tower assembly 160 to be floated to an installation site. This offers the potential for a simpler and lower cost deployment and installation as compared to many similarly sized conventional wind turbines such as turbines 10, 15 previously described.

While preferred embodiments have been shown and described, modifications thereof can be made by one skilled in the art without departing from the scope or teachings herein. The embodiments described herein are exemplary only and are not limiting. Many variations and modifications of the systems, apparatus, and processes described herein are possible and may be within the scope of the invention. For example, the relative dimensions of various parts, the materials from which the various parts are made, and other parameters can be varied. Accordingly, the scope of protection is not limited to the embodiments described herein, but is only limited by the claims that follow. Unless expressly stated otherwise, the steps in a method claim may be performed in any order. The recitation of identifiers such as (a), (b), (c) or (1), (2), (3) before steps in a method claim are not intended to and do not specify a particular order to the steps, but rather are used to simply subsequent reference to such steps.

## Claims

1. An offshore wind turbine (100), comprising:
an elongate base (110) having a longitudinal axis (111), a first end (110a), and a second end (110b) opposite the first end;
a tower (120) moveably coupled to the base, wherein the tower has a longitudinal axis, a first end distal the base and a second end disposed within the base, and wherein the tower is configured to extend axially from the first end of the base, wherein the base comprises an adjustably buoyant elongate truss (110) comprising a plurality of parallel legs (111) and a plurality of stiffening members (112) extending between the legs;
a nacelle (130) pivotally coupled to the first end of the tower, wherein the nacelle is configured to rotate about an axis oriented perpendicular to the longitudinal axis of the tower; and
a rotor (140) including a hub and a plurality of blades coupled to the hub, wherein the hub is coupled to the nacelle.

2. The offshore wind turbine of claim 1, the parallel legs and stiffening members are tubular members capable of being ballasted/de-ballasted and/or the truss has a tank (116) capable of being ballasted/de-ballasted.

3. The offshore wind turbine of claim 1, wherein the upper end of the tower comprises a pair of laterally spaced vertical support members (121), and wherein the nacelle (130) is positioned between the support members.

4. The offshore wind turbine of claim 1, wherein the nacelle (130) is configured to rotate relative to the tower between a vertical position with the blades (142) oriented parallel to a plane that is perpendicular to the axis of the tower and a horizontal position with the blades oriented parallel to a plane that is parallel to the axis of the tower.

5. The offshore wind turbine of claim 1, wherein the tower slidingly engages a plurality of circumferentially spaced guide rails (117) disposed within the elongate base.

6. The offshore wind turbine of claim 1, wherein the second end of the base (110b) has a pinned coupling (118) configured to engage the sea floor; and
wherein the base is configured to pivot about the pinned coupling (118).

7. The offshore wind turbine of claim 5, wherein the second end of the base comprises tank (116) configured to be selectively ballasted and de-ballasted; and
wherein the tank has at least one closeable port or valve.

8. The offshore wind turbine of claim 1, wherein the base has a positive net buoyancy.

9. A method for deploying and installing an offshore wind turbine, comprising:
(a) transporting a truss-tower assembly to an offshore installation site, wherein the truss-tower assembly includes:
an elongate truss having a central axis, wherein the truss (110) is adjustably buoyant and has a plurality of parallel legs (111) and a plurality of stiffening members (112) extending between the legs; and
a tower moveably coupled to the truss;
(b) rotating the truss-tower assembly from a horizontal orientation to a vertical orientation at the installation site, wherein rotating the truss-tower assembly includes adjusting the buoyancy of the truss;
(c) engaging the sea floor with a lower end of the truss;
(d) coupling a nacelle to an upper end of the tower;
(e) coupling a rotor to the nacelle; and
(f) telescoping the tower axially from the truss.

10. The method of claim 9, wherein (a) thru (e) occur before (f).

11. The method of claim 9, wherein (a) comprises floating the truss-tower assembly out to the installation site.

12. The method of claim 9, wherein (a) comprises:
loading the truss-tower assembly onto a barge;
moving the truss-tower assembly offshore on the barge;
offloading the truss-tower assembly from the barge after moving offshore; and
floating the truss-tower assembly out to the installation site after offloading the truss-tower assembly from the barge.

13. The method of claim 9, wherein (e) occurs before (d).

14. The method of claim 9, wherein (b) comprise ballasting a tank at the lower end of the truss.

15. The method of claim 9, wherein (b) comprises pivoting the truss-tower assembly about a pin extending across an opening in a barge.

16. The method of claim 9, further comprising:
(g) connecting a plurality of guide wires to the truss, wherein each guide wire has a first end secured to the truss and a second end secured to the sea floor; and
wherein (g) occurs before (d), (e), and (f).

17. The method of claim 9, further comprising releasably locking the tower to the truss after (f).

## Patentansprüche

1. Eine Offshore-Windkraftanlage (100), umfassend:
einen länglichen Sockel (110) mit einer Längsachse (111), eine erste Seite (110a) und eine zweite Seite (110b) gegenüber der ersten Seite;
einen Mast (120), beweglich mit dem Sockel verbunden, wobei der Mast eine Längsachse, eine erste Seite fern des Sockels und eine zweite Seite im Sockel aufweist, und wobei der Mast so eingerichtet ist, dass er sich axial von der ersten Seite des Sockels erstreckt, wobei der Sockel eine einstellbare schwimmende, längliche Traverse (110) umfasst, die eine Vielzahl paralleler Schenkel (111) und eine Vielzahl von Versteifungen (112) umfasst, die sich zwischen den Schenkeln erstrecken;
eine schwenkbar mit der ersten Seite des Mastes verbundene Gondel (130), wobei die Gondel so eingerichtet ist, dass sie sich um eine Achse dreht, die lotrecht zur Längsachse des Mastes steht; und
einen Rotor (140), einschließlich Nabe und einer Vielzahl von an der Nabe befestigten Rotorblättern, wobei die Nabe mit der Gondel verbunden ist.

2. Die Offshore-Windkraftanlage nach Anspruch 1, wobei es sich bei den parallelen Schenkeln und den Versteifungen um rohrförmige Elemente handelt, die beschwert/gelenzt werden können bzw. die Traverse über einen Tank (116) verfügt, der beschwert/gelenzt werden kann.

3. Die Offshore-Windkraftanlage nach Anspruch 1, wobei die Oberseite des Mastes ein Paar vertikale Stützelemente (121) mit lateralem Abstand umfasst und wobei die Gondel (130) zwischen den Stützelementen angeordnet ist.

4. Die Offshore-Windkraftanlage nach Anspruch 1, wobei die Gondel (130) in Relation zum Mast zwischen einer vertikalen Position im Hinblick auf die Blätter (142) parallel zu einer Fläche, die lotrecht auf der Achse des Mastes steht, und einer horizontalen Position im Hinblick auf die Blätter parallel zu einer Fläche gedreht werden kann, die parallel zur Achse des Mastes steht.

5. Die Offshore-Windkraftanlage nach Anspruch 1, wobei der Mast eine Vielzahl von umlaufend beabstandeten Führungsschienen (117) umfasst, die im länglichen Sockel verlaufen.

6. Die Offshore-Windkraftanlage nach Anspruch 1, wobei die zweite Seite des Sockel (110b) über eine Steckkupplung (118) verfügt, die eine Verbindung mit dem Meeresboden eingehen soll; und
wobei der Sockel so konzipiert ist, dass er um die Steckkupplung (118) gedreht werden kann.

7. Die Offshore-Windkraftanlage nach Anspruch 5, wobei die zweite Seite des Sockels einen Tank (116) umfasst, der selektiv belastet bzw. gelenzt werden kann; und
wobei der Tank über mindestens einen Anschluss oder ein Ventil verfügt, der/das sich schließen lässt.

8. Die Offshore-Windkraftanlage nach Anspruch 1, wobei der Sockel durch einen positiven Nettoauftrieb gekennzeichnet ist.

9. Ein Verfahren zum Einsatz und Aufbau einer Offshore-Windkraftanlage, umfassend:
(a) Transport einer Baugruppe aus Traverse und Mast an einen Offshore-Aufstellungsort, wobei die Baugruppe aus Traverse und Mast Folgendes umfasst:
eine längliche Traverse mit einer Mittelachse, wobei die Traverse (110) einstellbar schwimmend gelagert ist und eine Vielzahl paralleler Schenkel (111) und eine Vielzahl Versteifungen (112) aufweist, die sich zwischen den Schenkeln erstrecken; und
einen beweglich mit der Traverse verbundenen Mast;
(b) Drehung der Baugruppe aus Traverse und Mast aus einer horizontalen Position in eine vertikale Position am Aufstellungsort, wobei die Drehung der Baugruppe aus Traverse und Mast die Einstellung des Auftriebs der Traverse umfasst;
(c) Verbindung des Meeresbodens mit einer unteren Seite der Traverse;
(d) Verbindung der Gondel mit einer oberen Seite des Mastes;
(e) Verbindung eines Rotors mit der Gondel; und
(f) Ausfahren des Mastes in axialer Richtung aus der Traverse.

10. Das Verfahren nach Anspruch 9, wobei (a) bis (e) vor (f) erfolgen.

11. Das Verfahren nach Anspruch 9, wobei (a) das Schwimmen der Baugruppe aus Traverse und Mast zum Aufstellungsort umfasst.

12. Das Verfahren nach Anspruch 9, wobei (a) Folgendes umfasst:
Verladung der Baugruppe aus Traverse und Mast auf einen Frachtkahn;
Offshore-Transport der Baugruppe aus Traverse und Mast mit dem Frachtkahn;
Entladung der Baugruppe aus Traverse und Mast vom Frachtkahn nach Erreichen des offenen Meeres; und
Schwimmen der Baugruppe aus Traverse und Mast zum Aufstellungsort nach dem Entladen der Baugruppe aus Traverse und Mast vom Frachtkahn.

13. Das Verfahren nach Anspruch 9, wobei (e) vor (d) erfolgt.

14. Das Verfahren nach Anspruch 9, wobei (b) die Belastung eines Tanks an der unteren Seite der Traverse umfasst.

15. Das Verfahren nach Anspruch 9, wobei (b) die Drehung der Baugruppe aus Traverse und Mast um einen Stift über eine Öffnung in einem Frachtkahn umfasst.

16. Das Verfahren nach Anspruch 9, ferner umfassend:
(g) Verbindung einer Vielzahl von Führungsdrähten mit der Traverse, wobei jeder Führungsdraht über eine an der Traverse befestigte erste Seite und eine mit dem Meeresboden verbundene zweite Seite verfügt; und
wobei (g) vor (d), (e) und (f) erfolgt.

17. Das Verfahren nach Anspruch 9, ferner umfassend die trennbare Verbindung des Mastes mit der Traverse im Anschluss an (f).

## Revendications

1. Une éolienne offshore (100), comprenant :
un socle allongé (110) avec un axe longitudinal (111), un premier bout (110a), et un deuxième bout (110b) situé en face du premier bout ;
un mât (120) accouplé de façon mobile avec le socle, le mât présentant un axe longitudinal, une première extrémité distale du socle, et une deuxième extrémité disposée au sein du socle, le mât étant configuré pour se déployer axialement depuis le premier bout du socle, le socle comprenant un bâti allongé à flottabilité ajustable (110) composé d'une pluralité de montants parallèles (111) et d'une pluralité d'éléments raidisseurs (112) s'étendant entre les montants ;
une nacelle (130) accouplée de façon pivotante avec la première extrémité du mât, la nacelle étant configurée pour tourner autour d'un axe perpendiculaire à l'axe longitudinal du mât ; et
un rotor (140) comprenant un moyeu et une pluralité de pales accouplées avec le moyeu, le moyeu étant accouplé avec la nacelle.

2. L'éolienne offshore selon la revendication 1, les montants parallèles et les éléments raidisseurs pouvant être ballastés/dé-ballastés et/ou le bâti possédant une cuve (116) pouvant être ballastée/dé-ballastée.

3. L'éolienne offshore selon la revendication 1, l'extrémité supérieure du mât comprenant une paire d'éléments de support vertical à espacement latéral (121), et la nacelle (130) étant positionnée entre les éléments de support.

4. L'éolienne offshore selon la revendication 1, la nacelle (130) étant configurée pour tourner relativement au mât entre une position verticale, dans laquelle les pales (142) sont orientées parallèlement à un plan perpendiculaire à l'axe du mât, et une position horizontale, les pales étant orientées parallèlement à un plan parallèle à l'axe du mât.

5. L'éolienne offshore selon la revendication 1, le mât s'engageant de façon coulissante avec une pluralité de rails de guidage à espacement circonférentiel (117) disposés au sein du socle allongé.

6. L'éolienne offshore selon la revendication 1, la deuxième extrémité du socle (110b) possédant une fixation chevillée (118) configurée pour s'engager avec le fond marin ; et
le socle étant configuré pour pivoter autour de la fixation chevillée (118).

7. L'éolienne offshore selon la revendication 5, la deuxième extrémité du socle comprenant une cuve (116) configurée pour être ballastée et dé-ballastée de façon sélective ; et
la cuve possédant au moins un orifice ou une vanne pouvant être fermé.

8. L'éolienne offshore selon la revendication 1, le socle présentant une flottabilité nette positive.

9. Une méthode de déploiement et d'installation d'une éolienne offshore, comprenant :
(a) le transport d'un ensemble bâti - mât sur un lieu d'installation en mer, l'ensemble bâti - mât comprenant :
un bâti allongé avec un axe central, le bâti (110) étant flottant de façon ajustable, et possédant une pluralité de montants parallèles (111) et une pluralité d'éléments raidisseurs (112) s'étendant entre les montants ; et
un mât accouplé de façon mobile avec le bâti ;
(b) la rotation, sur le lieu de l'installation, de l'ensemble bâti - mât d'une orientation horizontale à une orientation verticale, la rotation de l'ensemble bâti - mât comprenant l'ajustage de la flottabilité du bâti ;
(c) l'engagement du fond marin avec une extrémité inférieure du bâti ;
(d) l'accouplement d'une nacelle avec une extrémité supérieure du mât ;
(e) l'accouplement d'un rotor avec la nacelle ; et
(f) le déploiement télescopique du mât axialement depuis le bâti.

10. La méthode selon la revendication 9, dans laquelle (a) à (e) a lieu avant (f).

11. La méthode selon la revendication 9, dans laquelle (a) comprend le flottage de l'ensemble bâti- mât jusqu'au lieu de l'installation.

12. La méthode selon la revendication 9, dans laquelle (a) comprend
le chargement de l'ensemble bâti - mât sur une barge ;
le déplacement de l'ensemble bâti - mât en mer sur la barge ;
le déchargement de l'ensemble bâti - mât de la barge après son déplacement en mer ; et
le flottage de l'ensemble bâti - mât jusqu'au lieu d'installation après le déchargement de l'ensemble bâti - mât de la barge.

13. La méthode selon la revendication 9, dans laquelle (e) a lieu avant (d).

14. La méthode selon la revendication 9, (b) comprenant le ballastage d'une cuve à l'extrémité inférieure du bâti.

15. La méthode selon la revendication 9, (b) comprenant le pivotement de l'ensemble bâti - mât autour d'une cheville à travers une ouverture d'une barge.

16. La méthode selon la revendication 9, (b) comprenant en outre :
(g) le raccordement d'une pluralité de fils de guidage sur le bâti, chaque fil de guidage possédant un premier bout, fixé sur le bâti, et un deuxième bout, fixé sur le fond marin ; et
(g) a lieu avant (d), (e), et (f).

17. La méthode selon la revendication 9, comprenant en outre le verrouillage détachable du mât sur le bâti après (f).
